# EUROPÄISCHE PATENTSCHRIFT

(11) **EP 1 776 262 B1**
(45) Veröffentlichungstag und Bekanntmachung des Hinweises auf die Patenterteilung: **12.01.2011**
(21) Anmeldenummer: 05777327.7
(22) Anmeldetag: 10.08.2005
(51) Int. Cl.: B60R 25/04

(54) **ZÜNDSCHLOSS FÜR EIN KRAFTFAHRZEUG**
IGNITION LOCK FOR A MOTOR VEHICLE
SERRURE DE CONTACT POUR VEHICULE AUTOMOBILE

(30) Priorität: 11.08.2004 DE 102004038948
(43) Veröffentlichungstag der Anmeldung: 25.04.2007
(73) Patentinhaber: Marquardt GmbH, 78604 Rietheim-Weilheim (DE)
(72) Erfinder: HUBER, Ralf, 78583 Böttingen (DE); PROSSNER, J., Ross, Cazenovia, NY 13035 (US); MUELLER, Karl, 78628 Rottweil-Neufra (DE)
(74) Vertreter: Otten, Herbert
(86) Internationale Anmeldenummer: PCT/EP2005/008685
(87) Internationale Veröffentlichungsnummer: WO 2006/018206

(56) Entgegenhaltungen:
- DE-A1- 19 747 720
- FR-A- 2 810 776

## Beschreibung

Die Erfindung betrifft ein Zündschloß nach dem Oberbegriff des Patentanspruchs 1.

In Kraftfahrzeugen befindet sich ein Zündschloßsystem, das unter anderem Schutz gegen unbefugte Benutzung bietet. Das Zündschloß und zugehörige Steuergeräte sind Bestandteile des Zündschloßsystems im Kraftfahrzeug,

Ein mit einem elektronischen Schlüssel zusammenwirkendes Zündschloßsystem in einem Kraftfahrzeug ist aus der DE 44 34 587 A1 bekannt. Das Zündschloß des Zündschloßsystems weist Schaltelemente und ein aus einer Ausgangsstellung in wenigstens eine Betätigungsstellung bewegbares, als Rotor ausgestaltetes Betätigungselement auf. Das Betätigungselement wirkt in der Betätigungsstellung schaltend auf ein Schaltelement zur Signalerzeugung ein, wodurch wiederum bestimmte Funktionen des Kraftfahrzeugs, wie beispielsweise das Einschalten der Zündung u. dgl., bewirkt werden.

Beim bekannten Zündschloß sind herkömmliche elektrische Schalter als Schaltelemente verwendet. Das ist zum einen aufwendig sowie kostenintensiv. Zum anderen ist eine komplexe Anlenkung der Schalter am Betätigungselement notwendig, die auch eine gewisse Baugröße des Zündschlosses erfordert. In manchen Fällen reicht der zur Verfügung stehende Bauraum im Kraftfahrzeug nicht zur Aufnahme des Zündschlosses aus.

Weiter ist aus der FR 2 810 776 A ein Zündschloß für ein Kraftfahrzeug bekannt, bei dem das Betätigungselement eine Aufnahme zum Einstecken des Schlüssels aufweist, so daß das Betätigungselement mittels des Schlüssels manuell drehbar ist. Das Schaltelement, auf das das Betätigungselement in der Betätigungsstellung zur Signalerzeugung einwirkt, ist in der Art eines Schleifkontaktes ausgestaltet. Der Schleifkontakt umfaßt eine Kontaktfläche, die auf einem Träger befindlich ist, und einen Schleifer. Der Schleifer steht in Wirkverbindung mit dem Betätigungselement, derart daß der Schleifer in der Betätigungsstellung die Kontaktfläche kontaktgebend zur elektrischen Signalerzeugung berührt. Damit das Zündschloß erkennt, ob ein Schlüssel in die Aufnahme eingesteckt ist, weist das Zündschloß einen "Schlüssel-steckt"-Schalter auf, der ein entsprechendes "Schlüssel-steckt"-Signal abgibt. Bei dem Schlüssel-steckt-Schalter handelt es sich um einen herkömmlichen elektrischen Schalter.

Der Erfindung liegt ausgehend von der FR 2 810 776 A die Aufgabe zugrunde, das Zündschloß im Hinblick auf eine einfachere Ausgestaltung weiterzubilden.

Diese Aufgabe wird bei einem gattungsgemäßen Zündschloß durch die kennzeichnenden Merkmale des Anspruchs 1 gelöst.

Beim erfindungsgemäßen Zündschloß dient ein in der Art eines Schleifkontaktes ausgestaltetes weiteres Schaltelement als Schlüssel-steckt-Schalter. Der Schleifer des Schlüssel-steckt-Schalters kommt durch das Einstecken des Schlüssels in die Aufnahme am Betätigungselement in kontaktgebender Berührung mit der zugeordneten Kontaktfläche, wodurch das Schlüssel-steckt-Signal erzeugt wird. Um auch bei nachfolgender Drehung des Rotors das Schlüssel-steckt-Signal weiter zu erzeugen, ist die Kontaktfläche für den Schlüssel-steckt-Schalter derart ausgestaltet, daß der Schleifer in Berührung mit der Kontaktfläche beim Drehen des Betätigungselements bleibt. Dabei handelt es sich um eine besonders kompakte Anordnung des Schaltelements, wodurch eine äußerst kleinbauende und dennoch eine hohe Funktionalität aufweisende Ausgestaltung für das Zündschloß gelingt. Außerdem erhöht eine solche Ausgestaltung vorteilhafterweise die Betriebs- sowie Diebstahlsicherheit. Weitere Ausgestaltungen der Erfindung sind Gegenstand der Unteransprüche.

In üblicher Weise besitzt das Zündschloß ein Gehäuse und das Betätigungselement ist als drehbar im Gehäuse gelagerter Rotor ausgebildet. Damit läßt sich das Zündschloß in vom Benutzer gewohnter Weise bedienen.

Zur Erhöhung der Diebstahlsicherheit kann im Betätigungselement wenigstens ein durch das Einstecken des Schlüssels in die Aufnahme betätigbarer, federbelasteter Schieber angeordnet sein. Der Schieber dient dann als Bewegungssperre für das Betätigungselement, insbesondere als Drehsperre für den Rotor, bei nicht eingestecktem Schlüssel. Alternativ oder auch zusätzlich kann ein gegebenenfalls weiterer Schieber als Abzugsperre für den Schlüssel bei nicht in Ausgangsstellung befindlichen Betätigungselement dienen. Dadurch wird wiederum die Sicherheit für den Betrieb des Kraftfahrzeugs gesteigert, da der Schlüssel während des Betriebs nicht abgezogen werden kann. Vielmehr ist ein Abziehen des Schlüssels erst nach Abstellen des Motors des Kraftfahrzeugs möglich.

Zweckmäßigerweise besteht der Träger aus einer kostengünstigen Leiterplatte. Die Kontaktfläche läßt sich dann als Leiterbahn auf der Leiterplatte ausbilden. Um eine ausfall-und/oder korrosionssichere Kontaktgabe zu gewährleisten, kann die Leiterbahn vergoldet sein. In kompakter Bauweise ist am Betätigungselement ein Drehteller zur Aufnahme des Schleifers angeordnet, so daß der Drehteller mittels des als Rotor ausgebildeten Betätigungselements drehbar ist. Zur Herstellung der Wirkverbindung zwischen dem Betätigungselement und dem Drehteller bietet es sich an, daß eine Achse am Betätigungselement in eine korrespondierende Öffnung am Drehteller zu dessen Drehung eingreift.

Um die gewünschten Funktionen für den Betrieb des Kraftfahrzeugs durch das Zündschloß auszulösen, bietet es sich an, daß mehrere Schaltelemente in der Art eines Schleifkontaktes im Zündschloß befindlich sind. Dadurch sind Schaltsignale in mehreren Drehstellungen des Betätigungselements erzeugbar, wobei die Schaltsignale dann zur Auslösung der jeweiligen Funktionen dienen. Der kompakten Bauweise halber können die Schleifer an einer gemeinsamen Halterung in der Art eines Stanzteils angeordnet und mittels der Halterung in einer Aufnahme am Drehteller befestigt sein. Ist das Betätigungselement als drehbarer Rotor ausgebildet, so ist die dem jeweiligen Schleifer zugeordnete Kontaktfläche als kreisabschnittsförmige Leiterbahn auf der Leiterplatte ausgestaltet.

Der Schlüssel-steckt-Schalter läßt sich besonders kompakt dadurch ausgestalten, daß der Schleifer des Schlüssel-steckt-Schalters gegen die Kraft einer Feder im Drehteller, und zwar in etwa parallel zum Drehteller, verschiebbar angeordnet ist. Die Bewegung beim Stecken des Schlüssels in die Aufnahme wird dann auf den Schleifer zu dessen Verschiebung auf die zugeordnete Kontaktfläche übertragen. Hierzu kann die Achse am Betätigungselement beim Stecken des Schlüssels in etwa senkrecht zum Drehteller in der Öffnung bewegbar sein, wobei mittels eines Ansatzes an der Achse deren Bewegung zur Verschiebung des Schleifers in etwa parallel zum Drehteller fährt. Der Ansatz an der Achse kann wiederum in der Art einer schiefen Ebene ausgestaltet sein.

Der elektronische Schlüssel besitzt bevorzugterweise einen, beispielsweise im niederfrequenten Bereich arbeitenden, Transponder zum Code-Austausch mit einer elektronischen Wegfahrsperre, einem Steuergerät o. dgl. im Kraftfahrzeug. Dazu korrespondierend können platzsparend auf der Leiterplatte Antennen zur Übertragung von elektromagnetischen Signalen angeordnet sein. Dadurch ist eine Kommunikation mittels der elektromagnetischen Signale mit dem in der Aufnahme befindlichen elektronischen Schlüssel ermöglicht, die bei positiver Code-Auswertung zur Freigabe von Funktionen des Kraftfahrzeugs führt.

Zusammenfassend läßt sich zur Funktionsweise des Zündschlosses mit diesen weiteren Ausgestaltungen folgendes sagen. Durch das Stecken des Schlüssels in das Zündschloß wird die den Rotor bildende Hülse nach hinten gedrückt. Dabei wird über eine schiefe Ebene an der Hülse eine Blattfeder mit zwei Kontaktfedern ausgelenkt, wodurch diese beiden Kontaktfedern den Kontakt über auf der Leiterplatte kreisförmig angeordnete, vergoldete Leiterbahnen zur Erzeugung des Schlüssel-steckt-Signals schließen. Wird der Schlüssel gedreht, so bleibt dieser Kontakt und somit das Schlüssel-steckt-Signal erhalten. Ebenfalls werden beim Drehen der Hülse durch einen weiteren Schleiferkontakt, welcher auf einem mit dem Rotor verbundenen Drehteller aufgebracht ist, auf der Leiterplatte befindliche vergoldete Leiterbahnen miteinander verbunden. Über die Anordnung der Leiterbahnen ist die Reihenfolge und die Position der dadurch erzeugten Signale zur Auslösung der jeweiligen Kraftfahrzeug-Funktionen bestimmt. Beim Zurückdrehen des Schlüssels werden die verschiedenen Signale wieder getrennt. Wird der Schlüssel in der Ausgangs- bzw. Nullstellung wieder aus dem Zündschloß abgezogen, so wird die Blattfeder mit den zwei Kontaktfedern wiederum mittels der Druckfeder sicher in deren Ausgangsstellung zurückgestellt, wobei das Schlüssel-steckt-Signal getrennt wird.

Die mit der Erfindung erzielten Vorteile bestehen insbesondere darin, daß das Zündschloß besonders kompakt ist und lediglich einen geringen Einbauraum im Kraftfahrzeug benötigt. So kann das Zündschloß trotz gesteigerter Funktionalität gegenüber einem herkömmlichen mechanischen Zündschloß beispielsweise in die Öffnung an der Lenkradsäule eingesetzt werden, in der bisher das herkömmliche mechanische Zündschloß untergebracht ist. Desweiteren ist das erfindungsgemäße Zündschloß besonders kostengünstig, da keine aufwendige Schloßmechanik wie bei herkömmlichen mechanischen Zündschlössem benötigt wird. Außerdem wird weitgehend auf den Einsatz von elektrischen Schaltern in der Art von Mikroschaltern o. dgl. verzichtet, so daß die Signale im Zündschloß, wie das Schlüssel-steckt-Signal, die Klemmensignale o. dgl., kostengünstig erzeugt werden können. Neben dem Kostenaspekt kommt das auch der Fehlerunanfälligkeit sowie der erhöhten Betriebssicherheit zugute.

Desweiteren können ohne Veränderung der Teileanzahl im Zündschloß mehr oder auch weniger Signale je nach Erfordernis erzeugt werden, indem die Leiterbahnen auf der Leiterplatte entsprechend ausgebildet sind. Ebenso läßt sich dadurch eine die Fehler- sowie Ausfallsicherheit erhöhende Redundanz für die Schaltsignale erreichen. Durch die erfindungsgemäße Art der Signalerzeugung kann das das Zündschloß umfassende System bei jedem Signalwechsel aus einem energiesparenden Sleep-Mode wieder aufgeweckt werden. Durch die Relativbewegung zwischen dem Kontakt und der vergoldeten Leiterbahn auf der Leiterplatte sind eventuelle Verschmutzungen unproblematischer, was wiederum der Ausfallsicherheit zugute kommt.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: das Zündschloß in perspektivischer Ansicht von vorne,
- Fig. 2: das Zündschloß in Explosionsdarstellung,
- Fig. 3: den Rotor mit Drehteller und Schleifer,
- Fig. 4: den Rotor mit Schleifer und Kontaktflächen,
- Fig. 5: den Drehteller mit Schleifer,
- Fig. 6: den Schlüssel-steckt-Schalter vor Einführen des Schlüssels in das Zündschloß und
- Fig. 7: den Schlüssel-steckt-Schalter nach Einführen des Schlüssels in das Zündschloß.

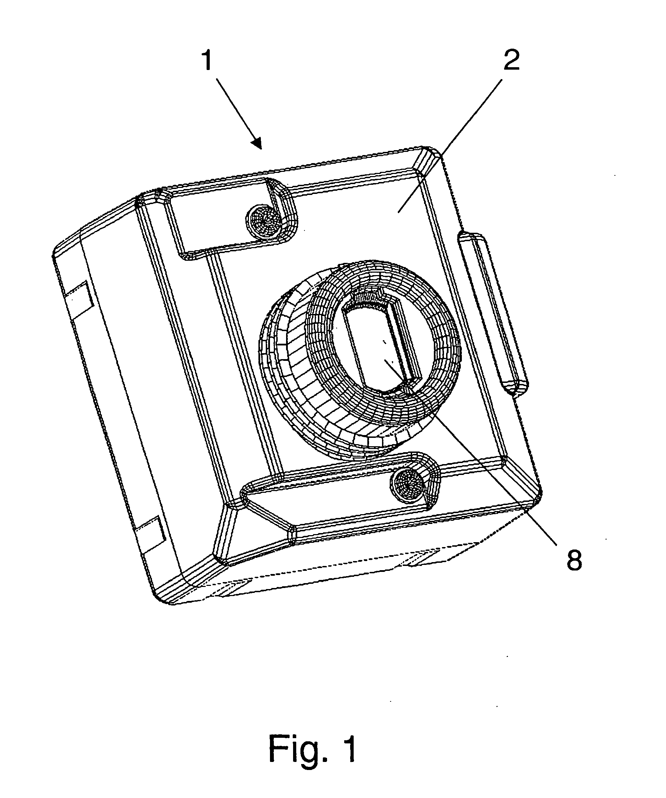

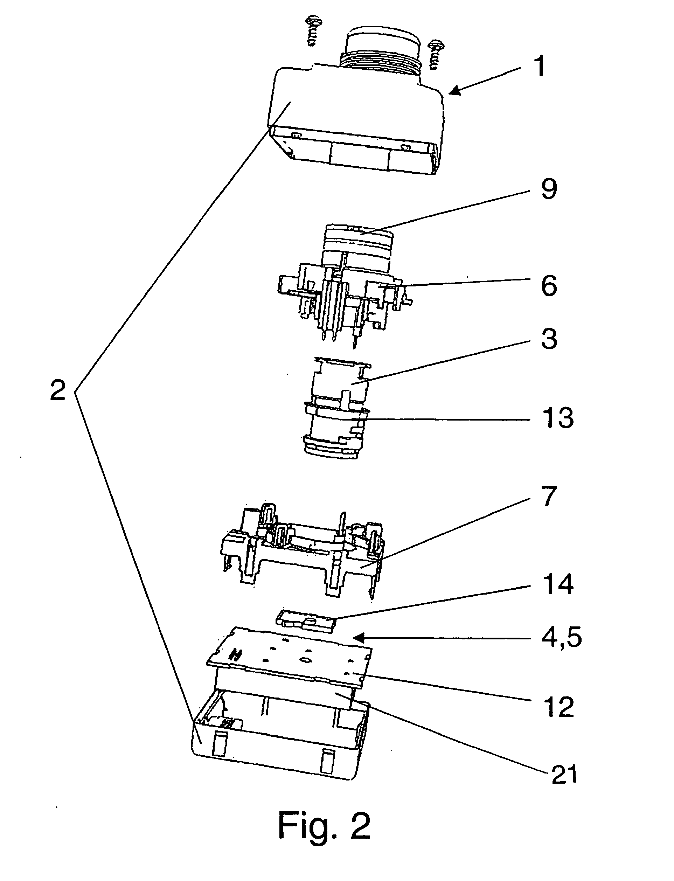

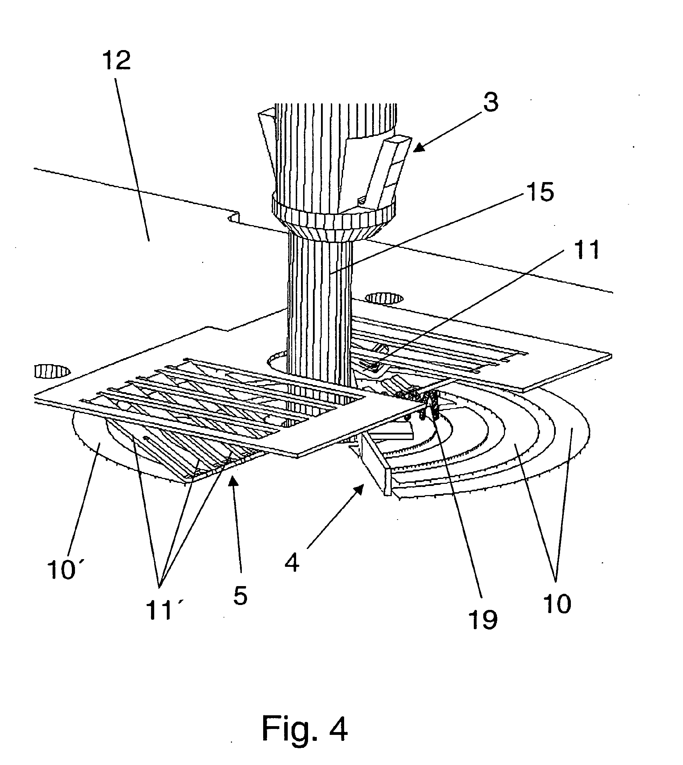

In Fig. 1 ist ein Zündschloß 1 für ein mit einem elektronischen Schlüssel zusammenwirkendes Zündschloßsystem in einem Kraftfahrzeug zu sehen. Das im Armaturenbrett o. dgl. des Kraftfahrzeugs eingebaute Zündschloß 1 besitzt ein verschraubtes Gehäuse 2. Im Gehäuse 2 befindet sich ein aus einer Ausgangsstellung in wenigstens eine Betätigungsstellung bewegbares Betätigungselement 3, wie näher aus Fig. 2 hervorgeht. Weiter enthält das Zündschloß 1 wenigstens ein Schaltelement 5 (siehe auch Fig. 4). Das Betätigungselement 3 wirkt in der Betätigungsstellung schaltend auf das Schaltelement 5 ein, so daß das Schaltelement 5 ein Signal erzeugt. Das Signal dient wiederum zur Auslösung von Funktionen des Kraftfahrzeugs, wie zur Einschaltung der Zündung, zum Starten des Kraftfahrzeugs oder sonstiger bestimmungsgemäßer Funktionen.

Wie weiter der Fig. 2 zu entnehmen ist, ist das Betätigungselement 3 in der Art eines Rotors ausgestaltet. Der Rotor 3 ist drehbar im Gehäuse 2, und zwar in einem zweiteilig aus einem Oberteil 6 und einem Unterteil 7 bestehenden eigenen Rotorgehäuse gelagert. Der Rotor 3 weist eine in Fig. 1 sichtbare Aufnahme 8 zum Einstecken des nicht weiter gezeigten elektronischen Schlüssels auf. Mittels des Schlüssels ist der Rotor 3 vom Benutzer manuell zwischen der Ausgangs- und der Betätigungsstellung drehbar. Der elektronische Schlüssel besitzt einen Transponder zum Code-Austausch mit einer im Kraftfahrzeug befindlichen elektronischen Wegfahrsperre, einem Steuergerät o. dgl., um nach positivem Code-Austausch deren bzw. dessen Aktivierung freizugeben. Zur induktiven Übertragung von Energie vom Zündschloß 1 auf den Schlüssel zu dessen Betrieb, wenn der Schlüssel sich in der Aufnahme 8 befindet, ist eine Spule 9 am Rotorgehäuse-Oberteil 6 angeordnet. Zusätzlich kann die Spule 9 auch mit dem Transponder im Schlüssel für den Code-Austausch zusammenwirken.

Aus Sicherheitsgründen ist ein Entnehmen des Schlüssels aus der Aufnahme 8 nur in der Ausgangsstellung des Rotors 3 zulässig. Hierfür ist im Rotor 3 wenigstens ein durch das Einstecken des Schlüssels in die Aufnahme 8 betätigbarer, federbelasteter Schieber 13 angeordnet. Dieser Schieber 13 wirkt in bekannter Weise mit dem Schlüssel derart zusammen, daß der Schieber 13 als Abzugsperre für den Schlüssel bei nicht in Ausgangsstellung befindlichem Rotor 3 dient. Der Schieber 13 oder auch gegebenenfalls ein weiterer, nicht gezeigter Schieber kann darüberhinaus als Bewegungssperre für das Betätigungselement 3, und damit als Drehsperre für den Rotor 3, bei nicht in die Aufnahme 8 eingestecktem Schlüssel dienen. In diesem Falle ist zur Erhöhung der Diebstahlsicherheit das Zündschloß 1 lediglich mit in die Aufnahme 8 eingestecktem Schlüssel betätigbar.

Das Schaltelement 5 ist, wie in Fig. 4 gezeigt ist, in der Art eines Schleifkontaktes mit einer Kontaktfläche 10' und einem Schleifer 11' ausgestaltet. Die Kontaktfläche 10' befindet sich auf einem Träger 12, der seinerseits gemäß Fig. 2 im Gehäuse 2 angeordnet ist. Der Schleifer 11' steht in Wirkverbindung mit dem Rotor 3, derart daß der Schleifer 11' bei Drehung des Rotors 3 in die Betätigungsstellung dazu korrespondierend in Berührung mit der Kontaktfläche 10' bewegt wird. Der Schleifer 11' weist eine gewisse, ihm innewohnende Elastizität in Richtung auf den Träger 12 auf, wodurch der Schleifer 11' in der Betätigungsstellung die Kontaktfläche 10' elastisch kontaktiert, um so aufgrund der anliegenden Spannung ein elektrisches Signal zu erzeugen.

Zweckmäßigerweise besteht der Träger 12 aus einer Leiterplatte. In diesem Fall ist die Kontaktfläche 10' als Leiterbahn auf der Leiterplatte 12 ausgebildet. Die Leiterbahn kann zwecks Korrosionsfestigkeit aus Gold bestehen oder auch lediglich vergoldet sein. Es bietet sich weiterhin an, auf der Leiterplatte 12 zusätzliche, der Kommunikation des Zündschlosses 1 mit dem Schlüssel dienende Antennen 21 anzuordnen, welche in Fig. 2 an der Unterseite der Leiterplatte 12 angedeutet sind. Die Kommunikation zwischen Schlüssel und Zündschloß 1, beispielsweise für eine Fernbedienung o. dgl., erfolgt mittels elektromagnetischer Signale, bevorzugterweise im höherfrequenten (RF / Radio Frequency) Bereich von 315 MHz und/oder 433 MHz, zu deren Übertragung die Antennen 21 im Zündschloß 1 dienen. Wie bereits erwähnt, weist desweiteren der elektronische Schlüssel einen Transponder auf, der bevorzugterweise mittels elektromagnetischer Signale im niederfrequenten (LF / Low Frequency) Bereich, beispielsweise bei 125 kHz, arbeitet. Die Übertragung dieser niederfrequenten elektromagnetischen Signale findet dann über die Spule 9 statt, wenn sich der elektronische Schlüssel in der Aufnahme 8 befindet. Bei positiver Auswertung der übertragenen Signale, also bei berechtigtem Schlüssel, ist die Freigabe von Funktionen des Kraftfahrzeugs mittels des Zündschlosses 1 ermöglicht.

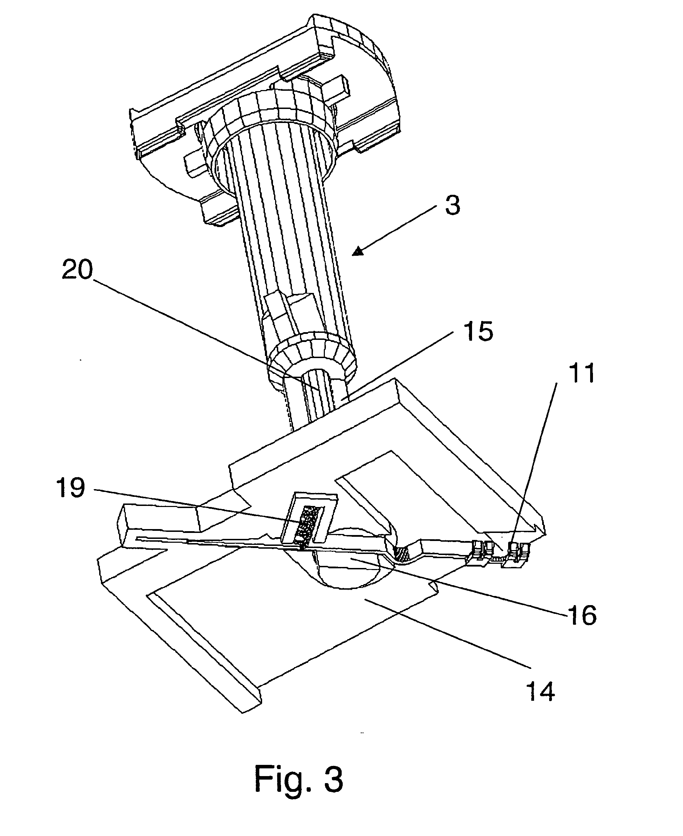

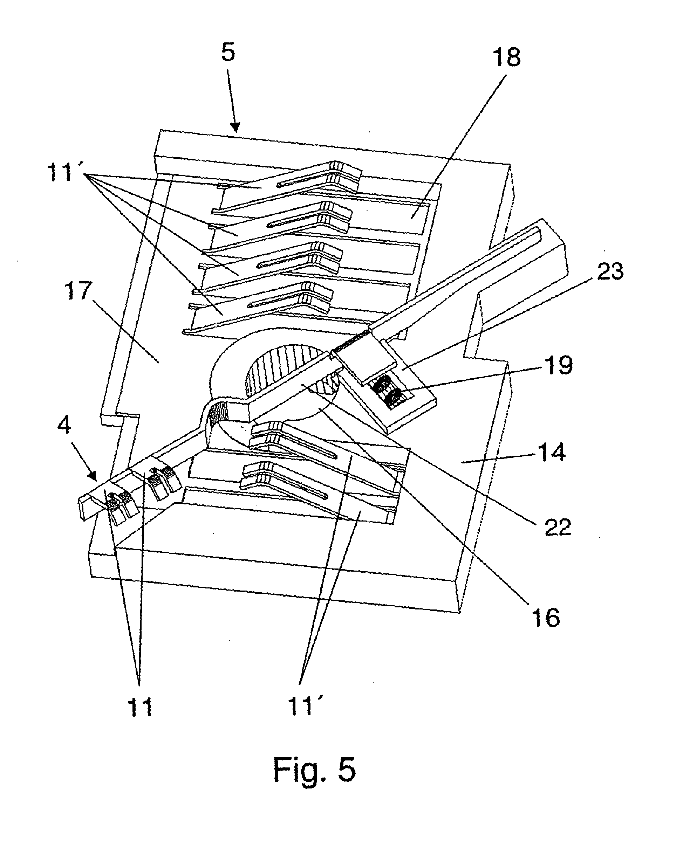

Zur Auslösung der jeweiligen Funktionen entsprechend der Drehstellung des Rotors 3 befinden sich mehrere Schaltelemente 5 in der Art eines Schleifkontaktes im Zündschloß 1. Mit Hilfe der Schaltelemente 5 sind dann Schaltsignale, die wiederum zur Auslösung und/oder Aktivierung der entsprechenden Funktionen durch das Zündschloß 1 dienen, in mehreren, gegebenenfalls unterschiedlichen Drehstellungen des Rotors 3 erzeugbar. Zur Aufnahme der Schleifer 11' ist gemäß Fig. 3 sowie Fig. 5 am Rotor 3 ein Drehteller 14 angeordnet, und zwar derart daß der Drehteller 14 mittels des Rotors 3 drehbar ist. Hierzu greift eine Achse 15 am Rotor 3 in eine korrespondierende Öffnung 16 am Drehteller 14 zu dessen Drehung ein. Die Schleifer 11' der Schaltelemente 5 sind in der Art eines Stanzteils ausgebildet und besitzen eine gemeinsame Halterung 17, wie der Fig. 5 zu entnehmen ist, an der sie zur Kontaktierung mit der Kontaktfläche 10' abstehend angeordnet sind. Die Halterung 17 für die Schleifer 11' ist in einer in Fig. 5 sichtbaren Aufnahme 18 am Drehteller 14 befestigt. Die dem jeweiligen Schleifer 11' zugeordnete Kontaktfläche 10' ist wegen der Drehung mittels des Rotors 3 als kreisabschnittsförmige Leiterbahn auf der Leiterplatte 12 ausgestaltet, wie näher in Fig. 4 zu sehen ist.

In einer alternativen und/oder auch weiterbildenden Ausgestaltung dient ein in der Art eines Schleifkontaktes ausgestaltetes weiteres Schaltelement 4, welches in Fig. 4 zu sehen ist, als sogenannter "Schlüssel-steckt"-Schalter. Dieses Schaltelement 4 gibt ein "Schlüssel-steckt"-Signal ab, wenn der Schlüssel in der Aufnahme 8 befindlich ist. Das Schlüssel-steckt-Signal kann zur Aktivierung der Energieübertragung zwischen dem Schlüssel und dem Zündschloß 1, der Codeübertragung zwischen dem Schlüssel und dem Zündschloß 1 o. dgl. dienen. Hierzu kommt der Schleifer 11 des Schlüssel-steckt-Schalters 4 durch das Einstecken des Schlüssels in die Aufnahme 8 am Betätigungselement 3 in Berührung mit der zugeordneten Kontaktfläche 10. Damit ist für den Schlüssel-steckt-Schalter 4 die Ausgangsstellung diejenige Stellung, bei der sich kein Schlüssel in der Aufnahme 8 befindet, und die Betätigungsstellung diejenige Stellung, bei der sich der Schlüssel korrekt in der Aufnahme 8 befindet. Die Kontaktfläche 10 für den Schlüssel-steckt-Schalter 4 ist derart kreisabschnittsförmig ausgestaltet, daß der Schleifer 11 in Berührung mit der Kontaktfläche 10 beim Drehen des Rotors 3 bleibt. Somit kann das Auslösen von Funktionen des Zündschlosses 1 verhindert werden, wenn der Schlüssel nicht oder nicht korrekt in der Aufnahme 8 befindlich ist.

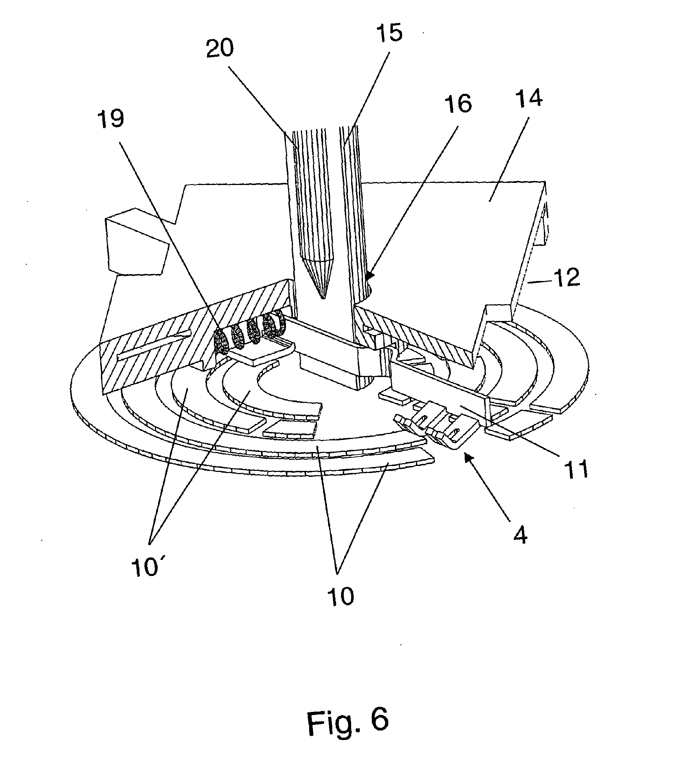

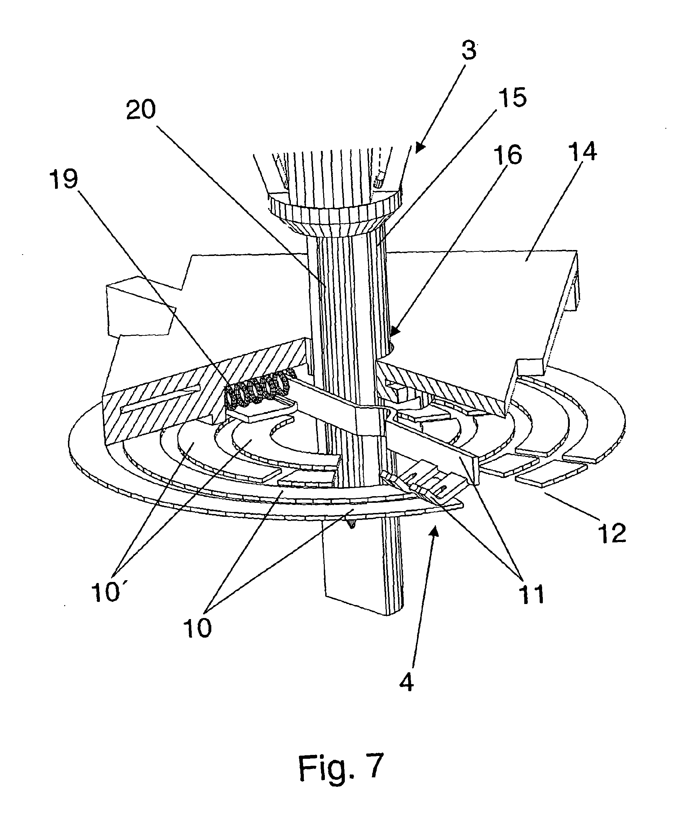

Die nähere Ausgestaltung des Schlüssel-steckt-Schalters 4 ist in der Fig. 5 zu sehen. Dessen Schleifer 11 ist gegen die Kraft einer Feder 19 im Drehteller 14 in etwa parallel zu diesem verschiebbar angeordnet. Hierzu sind die Schleifer 11 an einem Quersteg 22, beispielsweise in der Art eines Stanz-Biegeteils angeordnet, wobei die Feder 19 auf den Quersteg 22 einwirkt. Die Feder 19 stützt sich wiederum in einer Halteaufnahme 23 am Drehteller 14 ab. Befindet sich kein Schlüssel in der Aufnahme 8, so liegt der Schleifer 11 zwar auf der Leiterplatte 12 an, jedoch entfernt von der Kontaktfläche 10, was anhand von Fig. 6 zu erkennen ist. Die beim Stecken des Schlüssels in die Aufnahme 8 auftretende Bewegung wird dann auf den Schleifer 11 zu dessen Verschiebung auf die zugeordnete Kontaktfläche 10 übertragen, wie man in Fig. 7 sieht. Hierzu ist die Achse 15 am Rotor 3 beim Stecken des Schlüssels in etwa senkrecht zum Drehteller 14 in der Öffnung 16 bewegbar. Mittels eines in der Art einer schiefen Ebene ausgestalteten Ansatzes 20 an der Achse 15 führt die Bewegung der Achse 15 dann zur Verschiebung des Querstegs 22 mitsamt dem Schleifer 11 in etwa parallel zum Drehteller 14, wie man durch Vergleich von Fig. 6 mit Fig. 7 erkennt. Durch Verschiebung des Schleifers 11 auf die Kontaktfläche 10 wird dann das Schlüssel-steckt-Signal erzeugt. Umgekehrt entfällt durch Entnehmen des Schlüssels aus der Aufnahme 8 das Schlüssel-steckt-Signal durch Rückstellen des Querstegs 22 mitsamt dem Schleifer 11.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann anstelle des im Ausführungsbeispiel beschriebenen drehbaren Rotors 3 im Zündschloß 1 auch ein verschiebbares oder in sonstiger Weise bewegbares Betätigungselement verwendet werden. Weiter kann die Erfindung nicht nur an Zündschlössem für beliebige Fahrzeuge Verwendung finden, sondern auch an sonstigen Schlössern, beispielsweise solchen die an Immobilien, Arbeitsmaschinen, Werkzeugmaschinen o. dgl. angeordnet sind, eingesetzt werden.

### Bezugszeichen-Liste:

- 1:: Zündschloß
- 2:: Gehäuse
- 3:: Betätigungselement / Rotor
- 4:: Schaltelement / Schlüssel-steckt-Schalter
- 5:: Schaltelement
- 6:: (Rotorgehäuse-)Oberteil
- 7:: (Rotorgehäuse-)Unterteil
- 8:: Aufnahme (im Rotor)
- 9:: Spule
- 10,10':: Kontaktfläche
- 11,11':: Schleifer
- 12:: Träger / Leiterplatte
- 13:: Schieber
- 14:: Drehteller
- 15:: Achse
- 16:: Öffnung (im Drehteller)
- 17:: Halterung (für Schleifer)
- 18:: Aufnahme (an Drehteller)
- 19:: Feder (für Schleifer)
- 20:: Ansatz (an Achse)
- 21:: Antenne
- 22:: Quersteg
- 23:: Halteaufnahme

## Patentansprüche

1. Zündschloß für ein mit einem elektronischen Schlüssel zusammenwirkendes Zündschloßsystem in einem Kraftfahrzeug, mit einem Schaltelement (5), und mit einem aus einer Ausgangsstellung in wenigstens eine Betätigungsstellung bewegbaren, als Rotor ausgebildeten Betätigungselement (3), wobei das Betätigungselement (3) eine Aufnahme (8) zum Einstecken des elektronischen Schlüssels aufweist, derart daß das Betätigungselement (3) mittels des Schlüssels manuell drehbar ist, wobei das Betätigungselement (3) in der Betätigungsstellung auf das Schaltelement (5) zur Signalerzeugung einwirkt, wobei das Schaltelement (5) in der Art eines Schleifkontaktes mit einer Kontaktfläche (10') und einem Schleifer (11') ausgestaltet ist, wobei die Kontaktfläche (10') auf einem Träger (12) befindlich ist, und wobei der Schleifer (11') in Wirkverbindung mit dem Betätigungselement (3) steht, derart daß der Schleifer (11') in der Betätigungsstellung die Kontaktfläche (10') berührt, **dadurch gekennzeichnet, daß** ein in der Art eines Schleifkontaktes ausgestaltetes weiteres Schaltelement (4) als "Schlüssel-steckt"-Schalter zur Abgabe eines "Schlüssel-steckt"-Signals dient, daß der Schleifer (11) des Schlüssel-steckt-Schalters (4) durch das Einstecken des Schlüssels in die Aufnahme (8) am Betätigungselement (3) in Berührung mit der zugeordneten Kontaktfläche (10) kommt, und daß die Kontaktfläche (10) für den Schlüssel-steckt-Schalter (4) derart Kreisabschnittsförmig ausgestaltet ist, daß der Schleifer (11) in Berührung mit der Kontaktfläche (10) beim Drehen des Betätigungselements (3) bleibt.

2. Zündschloß nach Anspruch 1, **dadurch gekennzeichnet, daß** das Zündschloß (1) ein Gehäuse (2) besitzt, und daß vorzugsweise das als Rotor ausgebildete Betätigungselement (3) drehbar im Gehäuse (2) gelagert ist.

3. Zündschloß nach Anspruch 1 oder 2, **dadurch gekennzeichnet, daß** im Betätigungselement (3) wenigstens ein durch das Einstecken des Schlüssels in die Aufnahme (8) betätigbarer, federbelasteter Schieber (13) angeordnet ist, wobei der Schieber (13) als Bewegungssperre für das Betätigungselement (3), insbesondere als Drehsperre für den Rotor, bei nicht eingestecktem Schlüssel dient, und daß vorzugsweise ein gegebenenfalls weiterer Schieber (13) als Abzügsperre für den Schlüssel bei nicht in Ausgangsstellung befindlichen Betätigungselement (3) dient.

4. Zündschloß nach Anspruch 1, 2 oder 3, **dadurch gekennzeichnet, daß** der Träger (12) aus einer Leiterplatte besteht, daß vorzugsweise die Kontaktfläche (10, 10') als Leiterbahn auf der Leiterplatte (12) ausgebildet ist, daß weiter vorzugsweise am Betätigungselement (3) ein Drehteller (14) zur Aufnahme des Schleifers (11, 11') angeordnet ist, insbesondere derart daß der Drehteller (14) mittels des als Rotor ausgebildeten Betätigungselements (3) drehbar ist, und daß noch weiter vorzugsweise eine Achse (15) am Betätigungselement (3) in eine korrespondierende Öffnung (16) am Drehteller (14) zu dessen Drehung eingreift.

5. Zündschloß nach einem der Ansprüche 1 bis 4, **dadurch gekennzeichnet, daß** mehrere Schaltelemente (5) in der Art eines Schleifkontaktes im Zündschloß (1) befindlich sind, derart daß Schaltsignale in mehreren Drehstellungen des Betätigungselements (3) erzeugbar sind, daß vorzugsweise die Schleifer (11'), die gegebenenfalls an einer gemeinsamen Halterung (17) angeordnet sind, in einer Aufnahme (18) am Drehteller (14) befestigt sind, und daß weiter vorzugsweise die dem jeweiligen Schleifer (11') zugeordnete Kontaktfläche (10') als kreisabschnittsförmige Leiterbahn auf der Leiterplatte (12) ausgestaltet ist.

6. Zündschloß nach einem der Ansprüche 1 bis 5, **dadurch gekennzeichnet, daß** der Schleifer (11) des Schlüssel-steckt-Schalters (4) gegen die Kraft einer Feder (19) im Drehteller (14), insbesondere in etwa parallel zum Drehteller (14), verschiebbar angeordnet ist, daß vorzugsweise die Bewegung beim Stecken des Schlüssels in die Aufnahme (8) auf den Schleifer (11) zu dessen Verschiebung auf die zugeordnete Kontaktfläche (10) übertragen wird, daß weiter vorzugsweise die Achse (15) am Betätigungselement (3) beim Stecken des Schlüssels in etwa senkrecht zum Drehteller (14) in der Öffnung (16) bewegbar ist, und daß noch weiter vorzugsweise mittels eines Ansatzes (20) an der Achse (15) deren Bewegung zur Verschiebung des Schleifers (11) in etwa parallel zum Drehteller (14) führt.

7. Zündschloß nach einem der Ansprüche 1 bis 6, **dadurch gekennzeichnet, daß** auf der Leiterplatte (12) Antennen (21) zur Übertragung von elektromagnetischen Signalen angeordnet sind, derart daß eine Kommunikation mittels der elektromagnetischen Signale mit dem elektronischen Schlüssel zur Freigabe von Funktionen des Kraftfahrzeugs ermöglicht ist, und daß vorzugsweise der elektronische Schlüssel einen Transponder zur Kommunikation im niederfrequenten Bereich aufweist, wobei insbesondere eine Kommunikation zur Freigabe von Funktionen des Kraftfahrzeugs bei in der Aufnahme (8) befindlichen Schlüssel ermöglicht ist.

## Claims

1. Ignition lock for an ignition locking system in a motor vehicle which works together with an electronic key, comprising a switching element (5), and an activating element (3) which can be moved from an initial position into at least one activating position and is designed as a rotor, whereby the activating element (3) comprises a holder (8) for inserting the electronic key, such that the activating element (3) can be rotated manually by means of the key, whereby the activating element (3) acts in the activating position on the switching element (5) for generating signals, whereby the switching element (5) is designed in the form of a sliding contact with a contact surface (10') and a slider (11'), whereby the contact surface (10') is located on a support (12) and whereby the slider (11') is In operational connection with the activating element (3), such that the slider (11') in the activating position touches the contact surface (10'), **characterised In that** an additional switching element (4) designed in the form of a sliding contact Is used as a "key-inserted" switch for supplying a "key-inserted" signal, **in that** the slider (11) of the key-inserted switch (4) by means of inserting the key into the mount (8) on the activating element (3) comes into contact with the assigned contact surface (10), and **in that** the contact surface (10) for the key-inserted switch (4) is designed to be in the form of a circular segment, such that the slider (11) remains in contact with the contact surface (10) on rotating the activating element (3).

2. Ignition lock according to claim 1, **characterised in that** the ignition lock (1) has a housing (2), and **in that** preferably the activating element (3) designed as a rotor is mounted rotatably in the housing (2).

3. Ignition lock according to claim 1 or 2, **characterised in that** in the activating element (3) at least one spring-loaded valve (13) activated by the insertion of the key into the holder (8) is arranged, whereby the valve (13) Is used as a movement block for the activating element (3), in particular as a rotational block for the rotor, when the key is not inserted, and **in that** preferably an optional additional valve (13) Is used as a removal block for the key when the activating element (3) is not in the initial position.

4. Ignition lock according to claim 1, 2 or 3, **characterised in that** the support (12) consists of a printed circuit board (12), **in that** preferably the contact surface (10, 10') is designed as a conducting path on the printed circuit board (12), **in that** also preferably on the activating element (3) a rotary disc (14) is arranged for mounting the slider (11, 11'), in particular such that the rotary disc (14) can be rotated by means of the activating element (3) designed as a rotor, and **in that** also preferably an axis (15) on the activating element (3) engages in a corresponding opening (16) on the rotary disc (14) for Its rotation.

5. Ignition lock according to one of claims 1 to 4, **characterised in that** several switching elements (5) are located in the form of a sliding contact in the ignition lock (1), such that switching signals can be generated in several rotational positions of the activating element (3), **in that** preferably the sliders (11'), which are arranged optionally on a common holder (17), are secured in a mount (18) on the rotary disc (14), and **in that** also preferably the contact surface (10') assigned to the respective slider (11') is designed as a circular segment-like conducting path on the printed circuit board (12).

6. Ignition lock according to one of claims 1 to 5, **characterised in that** the slider (11) of the key-Inserted switch (4) is arranged to be displaceable against the force of a spring (19) in the rotary disc (14), in particular approximately parallel to the rotary disc (14), **in that** preferably the movement on inserting the key into the holder (8) is transferred to the slider (11) for its displacement to the assigned contact surface (10), **in that** also preferably the axis (15) on the activating element (3) on inserting the key can be moved approximately perpendicularly to the rotary disc (14) in the opening (16), and **in that** also preferably by means of a step (20) on the axis (15) its movement leads to the displacement of the slider (11) approximately parallel to the rotary disc (14).

7. Ignition lock according to one of claims 1 to 6, **characterised in that** on the printed circult board (12) aerials (21) are arranged for the transmission of electromagnetic signals, such that communication is made possible by means of electromagnetic signals with the electronic key to release functions of the motor vehicle, and **in that** preferably the electronic key comprises a transponder for communication in the low frequency range, whereby in particular communication is made possible for releasing functions of the motor vehicle with a key located in the holder (8).

## Revendications

1. Serrure de contact pour un système de serrure de contact de véhicule automobile coopérant avec une clé électronique comprenant un élément de commutation (5) et un élément d'actionnement (3) réalisé en forme de rotor, mobile à partir d'une position de repos dans au moins une position d'actionnement,
- l'élément d'actionnement (3) comportant un logement (8) pour engager la clé électronique de façon que l'élément d'actionnement (3) puisse être tourné manuellement avec la clé,
- l'élément d'actionnement (3) en position d'actionnement, agit sur l'élément de commutation (5) pour produire un signal,
- l'élément de commutation (5) réalisé sous la forme d'un contact frottant étant équipé d'une surface de contact (10') et d'un frotteur (11) la surface de contact (10') se trouvant sur un support (12) et le frotteur (11') coopérant avec l'élément d'actionnement (3), de façon qu'en position d'actionnement, le frotteur (11') touche la surface de contact (10'),
serrure de contact **caractérisée en ce qu'**
- un autre élément de commutation (4) réalisé sous la forme d'un contact frottant sert de commutateur de « clé engagée » pour émettre un signal « clé engagée »,
- le frotteur (11) du commutateur de clé enfoncée (4) arrivant en contact avec la surface de contact (10) associée par l'enfoncement de la clé dans le logement (8) de l'élément d'actionnement (3), et
- la surface de contact (10) est réalisée en forme de segment de cercle, pour le commutateur de clé enfoncée (4) de façon que le frotteur (11) reste en contact avec la surface de contact (10), pendant la rotation de l'élément d'actionnement (3).

2. Serrure de contact selon la revendication 1,
**caractérisée en ce que**
la serrure de contact (1) comporte un boîtier (2), et
l'élément d'actionnement (3) réalisé de préférence comme rotor, est monté à rotation dans le boîtier (2).

3. Serrure de contact selon la revendication 1 ou 2,
**caractérisée par**
- un coulisseau (13) chargé par ressort est logé dans l'élément d'actionnement (3), ce coulisseau étant manoeuvré au moins par l'enfoncement de la clé dans le logement (8),
- le coulisseau (13) constituant un verrou de blocage de l'élément d'actionnement (3), notamment de blocage de la rotation du rotor lorsque la clé n'est pas engagée, et
- de préférence, le cas échéant, un autre coulisseau (13) sert de verrou d'extraction de la clé lorsque l'élément d'actionnement (3) n'est pas dans sa position de sortie.

4. Serrure de contact selon la revendication 1, 2 ou 3,
**caractérisée en ce que**
- le support (12) est une plaque de circuit,
- de préférence, la surface de contact (10, 10') est réalisée sous la forme d'un chemin conducteur sur la plaque de circuit (12), et
- en outre, de manière préférentielle, l'élément d'actionnement (3) comporte un plateau rotatif (14) pour recevoir le frotteur (11, 11'), notamment de façon que le plateau rotatif (14) tourne avec l'élément d'actionnement (3) réalisé comme rotor, et
- de manière encore plus préférentielle, un axe (15) de l'élément d'actionnement (3) pénètre dans un orifice correspondant (16) du plateau tournant (14) pour faire tourner celui-ci.

5. Serrure de contact selon l'une des revendications 1 à 4,
**caractérisée par**
- plusieurs éléments de commutation (5) à la manière d'un contact frottant sont prévus dans la serrure de contact (1) de façon à générer des signaux de commutation dans plusieurs positions de rotation de l'élément d'actionnement (3),
- de préférence, les frotteurs (11') montés le cas échéant sur un support (17) commun, sont fixés dans un logement (18) du plateau tournant (14), et
- de manière encore plus préférentielle, la surface de contact (10') associée à chaque frotteur (11') est un chemin conducteur en forme de segment de cercle réalisé sur la plaque de circuit (12).

6. Serrure de contact selon l'une des revendications 1 à 5,
**caractérisée en ce que**
- le frotteur (11) du commutateur de clé enfoncée (4) est monté coulissant contre la force d'un ressort (19) dans le plateau tournant (14), notamment sensiblement parallèlement au plateau tournant (14),
- de préférence, le mouvement lors de l'enfoncement de la clé dans le logement (8) est transmis au frotteur (11) pour le faire coulisser sur la surface de contact (10) associée,
- de manière encore plus préférentielle, l'axe (15) de l'élément d'actionnement (3), lors de l'enfoncement de la clé, est mobile sensiblement perpendiculairement au plateau tournant (14) dans l'ouverture (16), et
- de manière encore plus préférentielle, le mouvement de l'axe (15), à l'aide d'un prolongement (20) de l'axe se traduit par le coulissement du frotteur (11), sensiblement parallèlement au plateau tournant (14).

7. Serrure de contact selon l'une des revendications 1 à 6,
**caractérisée en ce que**
- la plaque de circuit (12) comporte des antennes (21) pour transmettre des signaux électromagnétiques de façon à permettre une communication par les signaux électromagnétiques avec la clé électronique pour libérer des fonctions du véhicule automobile, et
- de façon que de préférence la clé électronique comporte un transpondeur pour communiquer dans une plage basse fréquence, et notamment permettre une communication pour libérer des fonctions du véhicule lorsque la clé est dans le logement (8).
